# FASCICULE DE BREVET EUROPEEN

(11) **EP 2 490 935 B1**
(45) Date de publication et mention de la délivrance du brevet: **26.02.2014**
(21) Numéro de dépôt: 10768925.9
(22) Date de dépôt: 19.10.2010
(51) Int. Cl.: B64C 11/44

(54) **SYSTEME POUR FAIRE VARIER L'INCIDENCE DES PALES D'UNE HELICE DE TURBOMACHINE POUR AERONEF, UTILISANT UN MOTEUR ELECTRIQUE SANS BALAI**
SYSTEM ZUR VARIIERUNG DES ANSETZWINKELS DER SCHAUFELN EINES FLUGZEUGTRIEBWERKPROPELLERS MIT HILFE EINES BÜRSTENLOSEN ELEKTROMOTORS
SYSTEM FOR VARYING THE ANGLE OF ATTACK OF THE BLADES OF AN AIRCRAFT TURBINE ENGINE PROPELLER, USING A BRUSHLESS ELECTRIC MOTOR

(30) Priorité: 22.10.2009 FR 0957437
(43) Date de publication de la demande: 29.08.2012
(73) Titulaire: Snecma, 75015 Paris (FR)
(72) Inventeur: EYRAUD, Jean-Louis, 77950 Maincy (FR)
(74) Mandataire: Ilgart, Jean-Christophe
(86) Numéro de dépôt international: PCT/EP2010/065698
(87) Numéro de publication internationale: WO 2011/048081

(56) Documents cités:
- EP-A1- 2 028 099
- US-A- 4 591 313

## Description

### DOMAINE TECHNIQUE

La présente invention se rapporte de façon générale au domaine des systèmes pour faire varier l'incidence des pales d'une hélice de turbomachine pour aéronef, ce type de système étant également dénommé dispositif de calage en incidence ou encore dispositif de variation de pas.

Ici, l'invention s'applique à toute turbomachine pour aéronef comprenant au moins une hélice, tel qu'un turbopropulseur à hélice unique, ou encore un turbopropulseur à deux hélices contrarotatives, à savoir à double rangée de pales contrarotatives, par exemple du type « Open Rotor » (de l'anglais « à rotor non caréné »).

### ETAT DE LA TECHNIQUE ANTERIEURE

De l'art antérieur, il est connu un système pour faire varier l'incidence des pales d'une hélice, basé sur l'utilisation d'un vérin hydraulique dont le piston est relié mécaniquement à une roue d'entraînement des pieds d'aubes. La variation de l'incidence des aubes s'opère en modifiant l'étendue de sortie du piston.

Ce principe répandu présente néanmoins l'inconvénient de nécessiter un circuit hydraulique conséquent, intégrant en plus du vérin, une pompe, un réservoir d'huile, et une tuyauterie importante. Cela s'avère coûteux en termes de masse et d'encombrement, alors que l'hélice qui intègre ce système est déjà fortement encombrée par la présence d'autres équipements.

De plus, la présence d'un circuit hydraulique génère un risque de fuite d'huile susceptible de provoquer un feu au sein de la turbomachine.

Un exemple de système pour faire varier l'incidence des pales d'une hélice, le système comprenant un moteur électrique sans balai à flux radiale, est fourni par le document US 4,591,313 A1.

### EXPOSE DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet un système pour faire varier l'incidence des pales d'une hélice de turbomachine pour aéronef, chaque pale étant montée pivotante sur un moyeu tournant selon un axe de rotation de ladite hélice, ledit système comprenant un moteur électrique sans balai à flux axial comportant un stator équipé de bobines, destiné à être monté fixement sur une partie fixe de la turbomachine, ainsi qu'un rotor équipé d'aimants permanents, le rotor et le stator étant centrés sur l'axe de rotation de ladite hélice et agencés de manière à ce que les bobines se trouvent en regard desdits aimants permanents selon la direction dudit axe de rotation. De plus, il comprend des moyens de liaison mécanique entre ledit rotor et lesdites pales, et, en outre, ledit rotor est monté déplaçable axialement entre une position verrouillée dans laquelle il est solidaire en rotation du moyeu tournant, et une position déverrouillée dans laquelle sa rotation relativement audit moyeu selon l'axe de rotation de l'hélice entraîne, par l'intermédiaire desdits moyens de liaison mécanique, une variation de l'incidence des pales.

L'emploi du moteur électrique sans balai à flux axial autorise la suppression du circuit hydraulique encombrant rencontré dans l'art antérieur, ainsi que la suppression du risque de fuite associé à la présence de ce circuit. De façon générale, la conception du système se trouve simplifiée, et son encombrement réduit, surtout à proximité de l'arbre moteur de l'hélice.

En étant à flux axial, ce moteur électrique peut en effet disposer d'un diamètre important l'écartant considérablement de l'arbre moteur de l'hélice, où les conditions de température sont largement moins sévères.

Cette architecture fournit une flexibilité importante pour libérer totalement l'espace au centre du moyeu de la servitude du contrôle de pas, cet espace libéré pouvant alors servir au logement d'un réducteur et/ou d'un dispositif d'entraînement contrarotatif d'hélice. Elle apporte donc une simplification importante de la conception de ces derniers éléments, et leur assure donc une plus grande fiabilité.

D'autre part, contrairement à d'autres conceptions possibles, elle ne nécessite pas le transfert d'énergie électrique par contact glissant entre la partie fixe et la partie rotative du générateur électrique, source de dysfonctionnement connue dans ce type d'environnement.

De plus, les diamètres importants envisageables avec ce type de moteur sont favorables aux faibles régimes et aux forts couples.

L'invention permet globalement une commande simple, peu encombrante et fiable de l'incidence des pales d'une hélice de turbomachine.

De préférence, le système est conçu de manière à ce que le déplacement axial dudit rotor entre sa position verrouillée et sa position déverrouillée, et/ou son déplacement inverse, s'effectue en générant une force axiale de répulsion/attraction entre les bobines et les aimants. Ici, c'est donc les bobines et les aimants qui sont utilisés pour assurer au moins l'un des déplacements axiaux du rotor, en commandant de manière appropriée les bobines pour obtenir la force de répulsion/attraction souhaitée. De préférence, les deux déplacements sont chacun réalisé par force axiale de répulsion, respectivement d'attraction, entre les bobines et les aimants. Dans le cas où seul l'un des deux déplacements est opéré par force axiale de répulsion/attraction, l'autre déplacement axial peut quant à lui être réalisé à l'aide de moyens élastiques de rappel.

D'autres principes connus de l'homme du métier sont néanmoins envisageables pour l'obtention des déplacements axiaux du rotor du moteur sans balai, sans sortir du cadre de l'invention.

De préférence, le système comprend un dispositif mécanique de blocage en rotation du rotor avec ledit moyeu tournant, le dispositif étant enclenché lorsque le rotor occupe sa position verrouillée. Par exemple, il peut s'agir d'un dispositif mécanique de blocage en rotation comprenant des roues dentées.

De préférence, lesdits moyens de liaison mécanique entre ledit rotor et lesdites pales comprennent, associés à chaque pale, un doigt solidaire dudit rotor glissant dans une lumière d'un bras fixe en rotation par rapport à la pale concernée, selon son axe de pivotement. D'autres conceptions sont néanmoins envisageables, sans sortir du cadre de l'invention.

Préférentiellement, le système comprend également au moins un dispositif de stockage d'énergie destiné à être interposé entre le rotor et le moyeu tournant, ledit dispositif de stockage étant conçu pour emmagasiner de l'énergie lors de la rotation du rotor visant à augmenter l'incidence des pales. Ainsi, en cas d'incident survenant sur la turbomachine, cette énergie peut être libérée pour ramener les pales dans leur incidence minimale, afin de mettre l'hélice en drapeau.

L'invention a également pour objet une hélice pour turbomachine d'aéronef comprenant un système tel que décrit ci-dessus, servant à piloter ses pales en incidence.

Cette hélice intègre en outre un moyeu centré sur un axe longitudinal, un arbre d'entraînement en rotation dudit moyeu également centré sur l'axe longitudinal, et une pluralité de pales chacune montée pivotante sur ledit moyeu, selon un axe de pivotement.

De préférence, ledit rotor du moteur électrique sans balai est agencé autour dudit moyeu tournant, ce qui lui confère avantageusement un diamètre très important.

En outre, l'invention a également pour objet une turbomachine pour aéronef comprenant au moins une hélice tel que décrite ci-dessus. Comme mentionné précédemment, il peut s'agir d'un turbopropulseur à hélice unique, ou encore d'un turbopropulseur à deux hélices contrarotatives, à savoir à double rangée de pales contrarotatives, par exemple du type « Open Rotor ». Dans ce dernier cas, chacune des deux hélices présente donc son propre système pour faire varier l'incidence de ses pales.

Enfin, l'invention a pour objet un procédé de commande de l'incidence des pales d'une hélice de turbomachine pour aéronef, à l'aide d'un système tel que décrit ci-dessus. Pour modifier l'incidence des pales, il comprend les étapes suivantes :
- le déverrouillage du rotor du moteur électrique sans balai, en le déplaçant axialement de sa position verrouillée à sa position déverrouillée ;
- la mise en rotation du rotor pour amener les pales à une incidence désirée ; et
- le verrouillage du rotor du moteur électrique sans balai, en le déplaçant axialement de sa position déverrouillée à sa position verrouillée.

De préférence, comme mentionné ci-dessus, au moins l'une des étapes de déverrouillage et de verrouillage est réalisée en générant une force axiale de répulsion/attraction entre les bobines et les aimants.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1 représente une vue en coupe longitudinale d'une partie d'une hélice pour turbomachine d'aéronef, selon un mode de réalisation préféré de la présente invention ;
- la figure 2 représente une vue partielle, déployée dans un plan, d'une partie de l'hélice de la figure 1, vue radialement depuis l'extérieur ;
- les figures 3 à 5 schématisent une opération de changement d'incidence des pales, à l'aide du système dédié équipant l'hélice, ce système pour faire varier l'incidence des pales constituant également un objet de la présente invention ;
- les figures 6a et 6b montrent une première configuration possible d'aimants et de bobines équipant le moteur sans balai à flux axial du système pour faire varier l'incidence ;
- les figures 6c et 6d montrent une seconde configuration possible d'aimants et de bobines pour ce moteur sans balai ;
- la figure 7 représente une vue partielle, déployée dans un plan, d'une partie de l'hélice de la figure 1, montrant une coopération possible entre le rotor du moteur sans balai et le moyeu tournant de l'hélice ;
- les figures 8a et 8b représentent schématiquement un dispositif de stockage d'énergie interposé entre le rotor du moteur sans balai et le moyeu supportant les pales ;
- les figures 9a et 9b représentent des vues similaires à celles des figures 3 et 4, avec des moyens de liaison mécanique entre le rotor et les pales se présentant sous la forme d'une alternative de réalisation ; et
- la figure 10 représente une vue partiellement éclatée en perspective d'une partie d'une hélice pour turbomachine d'aéronef, selon un autre mode de réalisation préféré de la présente invention.

### EXPOSÉ DÉTAILLÉ DE MODES DE RÉALISATION PRÉFÉRÉS

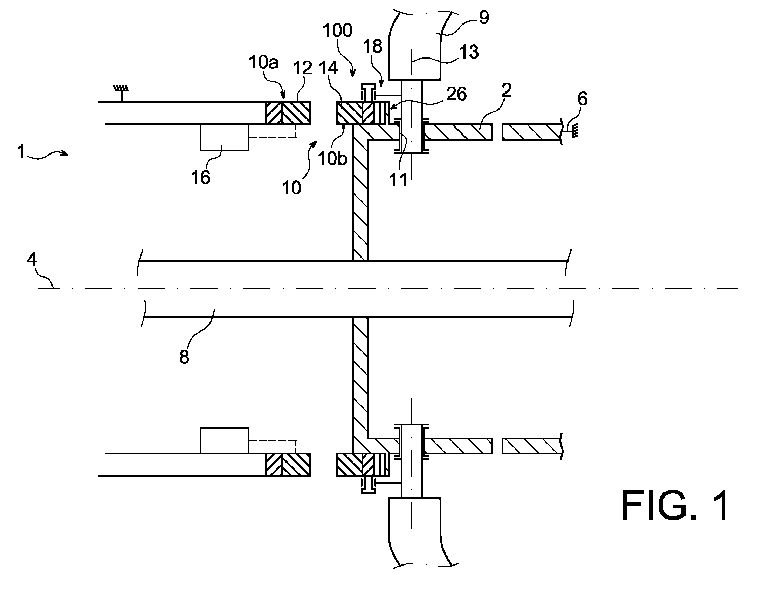

En référence à la figure 1, on peut apercevoir une hélice 1 pour turbomachine d'aéronef, de préférence du type turbopropulseur à hélice unique.

L'hélice 1 comprend un moyeu ou disque 2 centré sur un axe longitudinal 4 de l'hélice, ce disque étant monté à rotation par rapport à un stator 6 de l'hélice, selon l'axe 4. Il est entraîné en rotation par un arbre d'entraînement 8 également centré sur l'axe longitudinal 4, cet arbre pouvant être un arbre de sortie d'une boîte de vitesse alimentée par un générateur des gaz de la turbomachine, ou encore un arbre de sortie de ce générateur des gaz. Le couplage permanent en rotation de l'arbre 8 avec le moyeu 2 s'effectue de manière classique, connue de l'homme du métier.

Au niveau de sa périphérie, le moyeu 2 porte une pluralité de pales l'hélice 9, par exemple une dizaine ou plus, chacune montée pivotante dans un orifice correspondant 11 du moyeu 2, selon un axe de pivotement 13. Les axes de pivotement 13 sont tous situés dans un même plan orthogonal à l'axe de l'hélice 4, et de préférence orientés radialement.

L'hélice 1 comprend également un système 100 pour faire varier l'incidence des pales, permettant un pilotage simultané de leur incidence.

Ce système 100 comprend un moteur électrique sans balai 10 à flux axial, comportant un stator 10a monté fixement sur le stator 6 de l'hélice et équipé de bobines 12, ainsi qu'un rotor 10b équipé d'aimants permanents 14, et monté autour du moyeu tournant 2. De plus, le moteur comporte des moyens de commande 16 permettant de piloter l'alimentation électrique des bobines, ce type de moyens de commande étant connu de l'homme du métier.

Le rotor 10b et le stator 10a sont centrés sur l'axe de rotation de l'hélice, correspondant à l'axe 4. Afin de permettre le flux axial entre ceux-ci, ils sont agencés de manière à ce que les bobines 12 se trouvent en regard des aimants permanents 14 selon la direction de cet axe de rotation 4. Le rotor 10b et le stator 10a ont donc un diamètre important, et sont agencés de telle sorte que les bobines 12 et aimants permanents 14 se trouvent situés radialement vers l'extérieur par rapport à la partie des pieds de pale logée dans les orifices 11 du moyeu 2.

Le stator 10a prend la forme d'une couronne portant fixement, par exemple dans des logements appropriés de cette couronne, les bobines 12 espacées circonférentiellement les unes des autres, et prévues par exemple au nombre de neuf. Le rotor 10b prend lui aussi la forme d'une couronne portant fixement, par exemple dans des logements appropriés de cette couronne, les aimants permanents 14 espacées circonférentiellement les uns des autres, et prévus par exemple au nombre de quatorze, leur nombre étant inférieur à celui des bobines.

Ce type de moteur sans balai (de l'anglais « brushless »), fonctionne en créant, grâce aux moyens de commande 16, un champ tournant dans les bobines 12. Pour faire tourner le rotor dans un premier sens de rotation, le champ doit tourner en avance de phase sur la rotation, et inversement pour faire tourner le rotor dans le sens de rotation opposé.

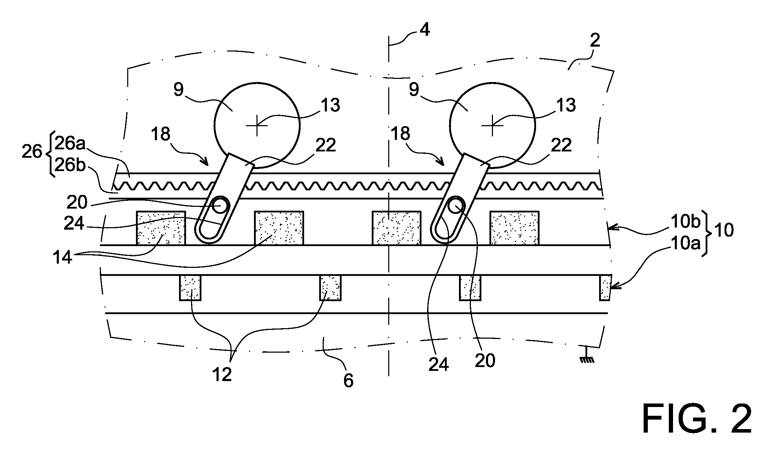

Le système 100 comporte également des moyens de liaison entre le rotor 10b et les pales 9. Ces moyens référencés de façon générale par la référence 18 sur la figure 1 vont être détaillés en référence à la figure 2. Sur celle-ci, on peut voir en effet que chaque pale 9 est associé à ses propres moyens de liaison 18 avec le rotor 10b, ces moyens consistant ici en un doigt 20 solidaire du rotor 10b et faisant saillie radialement vers l'extérieur, ainsi qu'un bras 22 fixe en rotation par rapport à sa pale associée 9, selon l'axe de pivotement 13. De plus, le bras 22 présente une lumière 24 dans laquelle glisse le doigt 20.

Le système 100 comporte par ailleurs un dispositif mécanique 26 de blocage en rotation du rotor 10b avec le moyeu tournant 2, ce dispositif comportant ici une première roue dentée 26a centrée sur l'axe 4 et solidaire de la couronne du rotor 10b, ainsi qu'une seconde roue dentée 26b de même diamètre, centrée sur l'axe 4 et solidaire du moyeu 2. Sur la figure 2, on peut apercevoir le dispositif mécanique 26 dans sa configuration enclenchée, obtenue grâce à l'engagement des dents des deux roues 26a, 26b empêchant la rotation relative du rotor 10b par rapport au moyeu 2. Comme cela va à présent être détaillé, le rotor 10b ainsi positionné occupe une position dite verrouillée, par opposition à une position dite déverrouillée qu'il peut également occuper.

En effet, l'une des particularités de la présente invention réside dans le fait que le rotor 10b est monté déplaçable axialement entre la position verrouillée de la figure 2 dans laquelle il est solidaire en rotation du moyeu tournant 2, et la position déverrouillée dans laquelle sa rotation relativement au moyeu entraîne, par l'intermédiaire des moyens de liaison mécanique 18, une variation de l'incidence des pales 9.

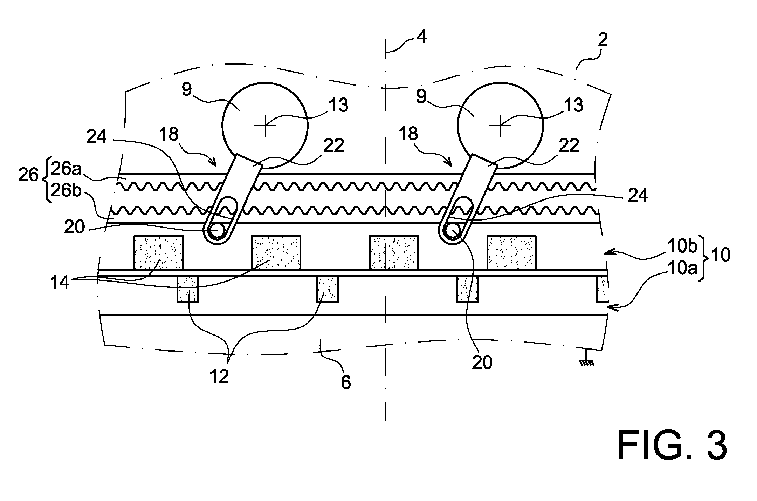

A cet égard, une opération de changement d'incidence des pales va à présent être détaillée en référence aux figures 2 à 5. Sur la figure 2, l'enclenchement du dispositif mécanique 26 empêche donc la rotation relative du rotor 10b et du moyeu 2, qui sont entraînés de manière solidaire par l'arbre moteur, avec les pales 9 occupant une incidence donnée, maintenue tant que le dispositif mécanique 26 reste enclenché. Lorsqu'un changement d'incidence des pales est requis, il est tout d'abord opéré un déverrouillage du rotor 10b, en le déplaçant axialement vers sa position déverrouillée, dans laquelle il est écarté de la roue dentée 26b comme montré sur la figure 3, et rapproché du stator 10a. Du fait de ce coulissement du rotor 10b sur le moyeu 2 dans la direction axiale, l'engagement des dents des roues 26a, 26b est rompu. D'ailleurs, durant ce mouvement du rotor 10b, chaque doigt 20 coulisse également dans sa lumière associée 24, sensiblement sur toute la longueur de celle-ci.

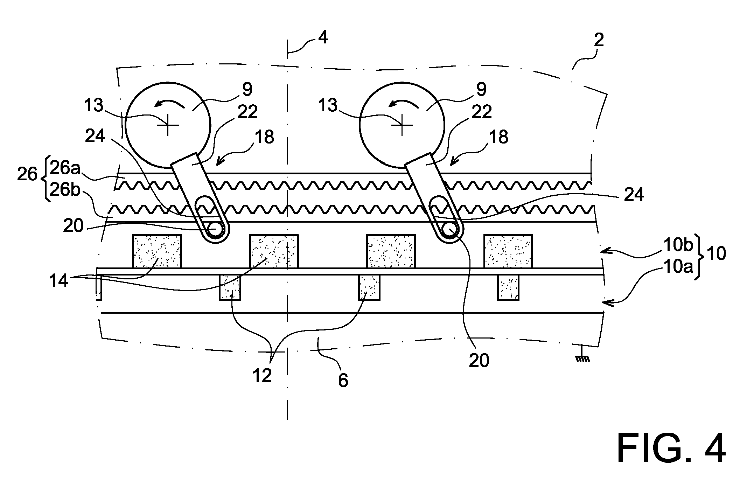

Ensuite, les moyens de commande 16 du moteur alimentent les bobines afin de faire tourner le rotor 10b selon une amplitude angulaire déterminée, conduisant à amener les pales 9, via les moyens de liaison mécanique 18, à une incidence désirée. Comme cela est schématisé sur la figure 4, la mise en rotation des doigts 20 par le rotor 10b provoque le pivotement de leur bras associé 22 selon l'axe 13, qui lui entraîne l'ensemble de la pale 9 en rotation selon ce même axe.

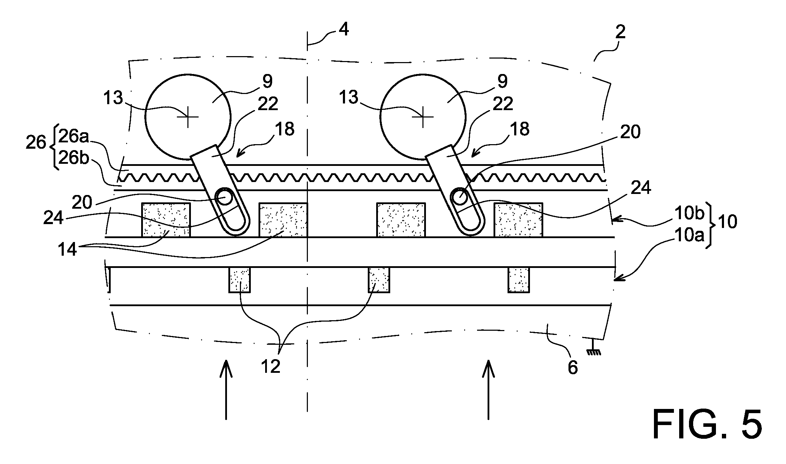

Une fois l'incidence désirée atteinte, il est opéré un verrouillage du rotor 10b, en le déplaçant axialement vers sa position verrouillée, dans laquelle il est à nouveau rapproché de la roue dentée 26b comme montré sur la figure 5, et éloigné du stator 10a. Du fait de ce coulissement du rotor 10b sur le moyeu 2 dans la direction axiale, l'engagement des dents des roues 26a, 26b est à nouveau activé, de sorte que l'incidence des pales ne peut plus être modifiée avant la mise en oeuvre d'une nouvelle opération de changement d'incidence semblable à celle qui vient d'être décrite.

A titre indicatif, il est noté que pour que l'engagement des dents ne modifie pas ou seulement de manière négligeable l'incidence des pales, le pas des dents des roues 26a, 26b est proche ou identique du pas de réglage de l'incidence des pales.

Concernant ce mode de réalisation préféré, il est fait en sorte que la position angulaire relative du rotor 10b et du moyeu 2 ne soit pas modifiée lors des déplacements axiaux du rotor 10b, afin de ne pas modifier involontairement l'incidence des pales. La solution de mise en mouvement électromagnétique du rotor, qui sera détaillée ci-après, est l'une des possibilités envisagées pour obtenir une telle fonctionnalité.

Egalement, il est noté que la configuration des moyens de liaison mécanique 18 est telle qu'elle peut éventuellement engendrer une modification de l'incidence des pales lors du mouvement axial du rotor 10b visant à le verrouiller, quand bien même celui-ci ne serait pas déplacé angulairement par rapport au moyeu 2 durant un tel mouvement axial. Dans un tel cas de figure, il est tenu compte de ce mouvement parasite dans l'étendue de la rotation du rotor, afin que l'incidence des pales obtenue à la fin de l'opération de modification soit celle désirée. En d'autres termes, si un tel mouvement parasite est censé se produire, alors le rotor 10b est stoppé en rotation dans une position dans laquelle il place les pales 9 dans une incidence différente de celle qui sera finalement obtenue, après verrouillage de ce rotor 10b.

Comme mentionné ci-dessus, le verrouillage et le déverrouillage du rotor 10b peuvent être astucieusement réalisés à l'aide du moteur électrique 10 commandé de façon particulière, et non à l'aide d'un dispositif d'entraînement additionnel, même si cette possibilité reste envisageable.

Pour ce qui concerne le déverrouillage, les bobines et aimants permanents sont utilisés de manière à générer une force d'attraction conduisant le rotor 10b à se déplacer axialement en direction du stator 10a. Plus précisément, les bobines 12 sont pilotées de manière à obtenir un champ axial fixe dans le repère tournant. Pour créer ce champ à partir du stator 10a, les bobines 12 sont commutées à la même vitesse que la vitesse de rotation du moyeu 2, de manière à avoir à chaque instant une majorité de bobines et d'aimants de sens opposé en regard, pour générer la force d'attraction précitées. Ce champ vu depuis le rotor 10b est axial d'orientation constante, tandis que vu depuis le stator, il est également axial d'orientation constante mais tourne à la vitesse du rotor 10b et du moyeu 2.

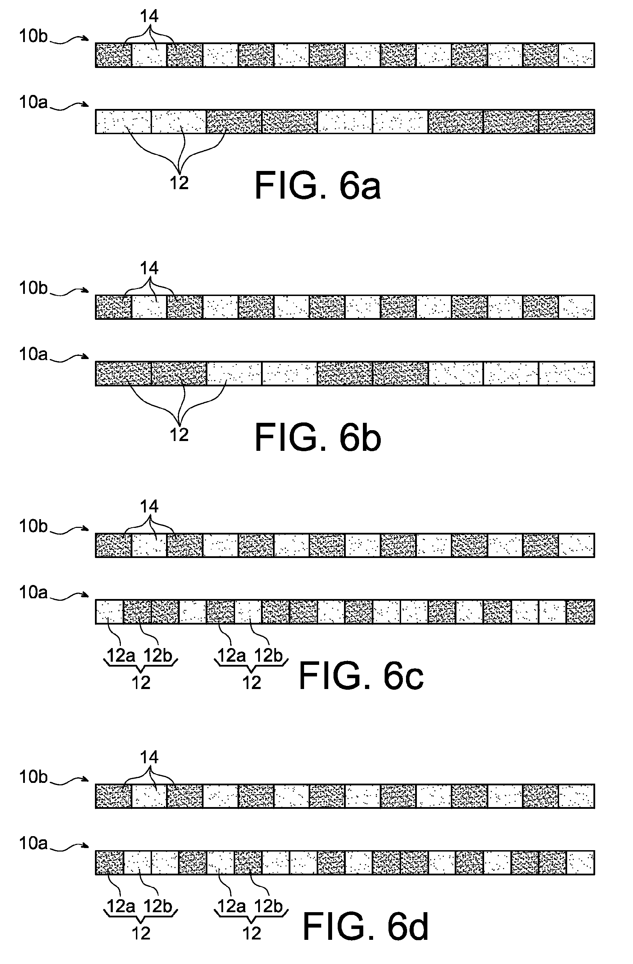

La figure 6a montre une vue schématique déployée dans un plan des bobines 12 et des aimants 14 équipant le moteur sans balai 10. Dans la configuration adoptée avec neuf bobines et quatorze aimants, on peut en effet piloter les polarités des bobines 12 pour qu'à chaque instant, chacune d'elles présente une surface aussi importante que possible en regard d'un aimant de polarité opposée. Ici, dans le cas le plus favorable, 60% de la surface totale des bobines se trouve en regard d'un aimant de polarité opposée, ce qui suffit pour obtenir la force d'attraction requise, même si le rotor est susceptible de vibrer du fait de la force opposée s'appliquant sur celui-ci, générée par les 40% de surface restante. Il en est de même lorsqu'une force de répulsion est requise, recherchée pour l'étape de verrouillage, cas dans lequel les polarités des bobines 12 sont pilotées pour qu'à chaque instant, chacune d'elles présente une surface aussi importante que possible en regard d'un aimant de même polarité, comme montré sur la figure 6b. A cet égard, sur ces figures, le grisage foncé correspond à une polarité positive tandis que le grisage clair correspond à une polarité négative.

Les figures 6c et 6d montrent un autre mode de réalisation préféré dans lequel chaque bobine 12 est divisée en deux parties distinctes 12a, 12b, pouvant adopter des polarités identiques ou opposées. La surface de recouvrement maximale peut alors être élevée de 60% à 75%, ce qui favorise l'obtention d'une force de répulsion/attraction plus intense, et diminue les effets de vibrations du rotor.

Il est noté que dans le mode de réalisation préféré décrit ci-dessus, la force de répulsion est produite par le moteur 10 non seulement durant l'étape de verrouillage du rotor 10b, mais également lorsque ce dernier est en position verrouillée, afin de maintenir l'engagement des dents des deux roues 26a, 26b du dispositif 26 de blocage en rotation du rotor 10b.

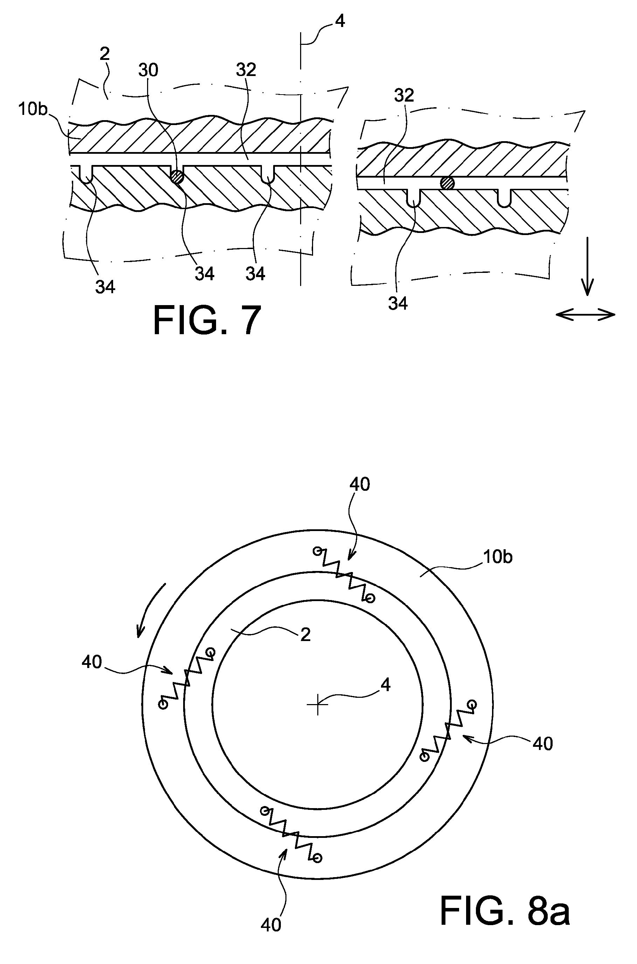

La figure 7 montre une façon de s'assurer que durant la mise en rotation du rotor 10b sur le moyeu 2, opérée pour changer l'incidence des pales, ce rotor ne se déplace pas axialement vis-à-vis de ce même moyeu. Pour ce faire, ce dernier est équipé d'un ou plusieurs pions 30 faisant saillie vers l'extérieur, tandis que le rotor 10b présente, sur sa surface interne, une rainure 32 dont l'une de ses parois latérales présente des logements 34 espacés régulièrement, selon une distance correspondant au pas de réglage de l'incidence des pales. Lorsque le rotor se trouve en position verrouillée telle que représentée sur la partie gauche de la figure 7, chaque pion 30 se trouve inséré dans l'un des logements 34. Par conséquent, cela conduit à un blocage en rotation du rotor par rapport au moyeu, ce système pouvant venir compléter le dispositif de blocage 26, ou le remplacer. En revanche, après le déverrouillage du rotor 10b, chaque pion 30 se situe dans la rainure 32, de sorte que lorsqu'il se trouve entre deux logements 34 comme représenté sur la partie droite de la figure 7, aucun déplacement relatif axial n'est possible entre le rotor en rotation et le moyeu 2.

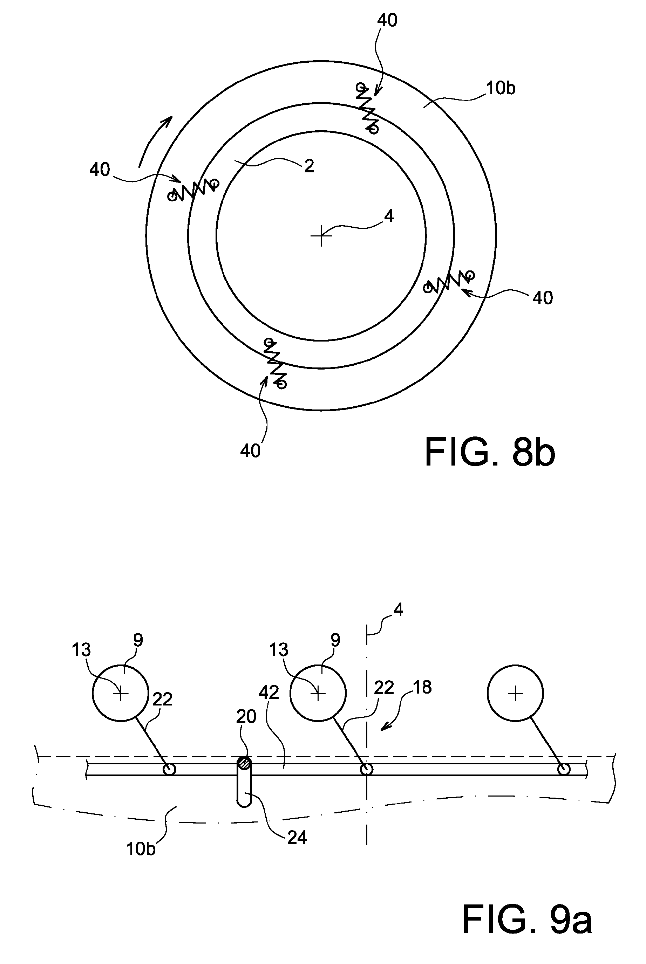

Afin de conférer une fonction de sécurité, également dite « Fail Safe », le système 100 peut être équipé de plusieurs dispositifs de stockage d'énergie 40 interposés entre le rotor 10b et le moyeu tournant 2. Ici, chaque dispositif 40 prend la forme d'un ressort ou équivalent dont les deux extrémités sont respectivement montées sur les éléments 10b, 2, ces ressorts étant conçus pour emmagasiner de l'énergie lors de la rotation du rotor visant à augmenter l'incidence des pales. Avec cette configuration, en cas d'incident survenant sur la turbomachine, l'énergie préalablement emmagasinée dans les dispositifs 40 est automatiquement libérée dès lors que la rotation du rotor relativement au moyeu 2 est déverrouillée. La libération de cette énergie produit une rotation relative du rotor par rapport au moyeu, dans un sens qui ramène les pales dans leur incidence minimale, permettant ainsi de mettre l'hélice en drapeau. A cet égard, la figure 8a montre un agencement avec des dispositifs 40 lors de la rotation du rotor 10b visant à augmenter l'incidence des pales, tandis que la figure 8b montre le même agencement lors de la libération d'énergie préalablement emmagasinée par les ressorts.

Une solution hydraulique de stockage d'énergie aurait également pu être envisagée, sans sortir du cadre de l'invention.

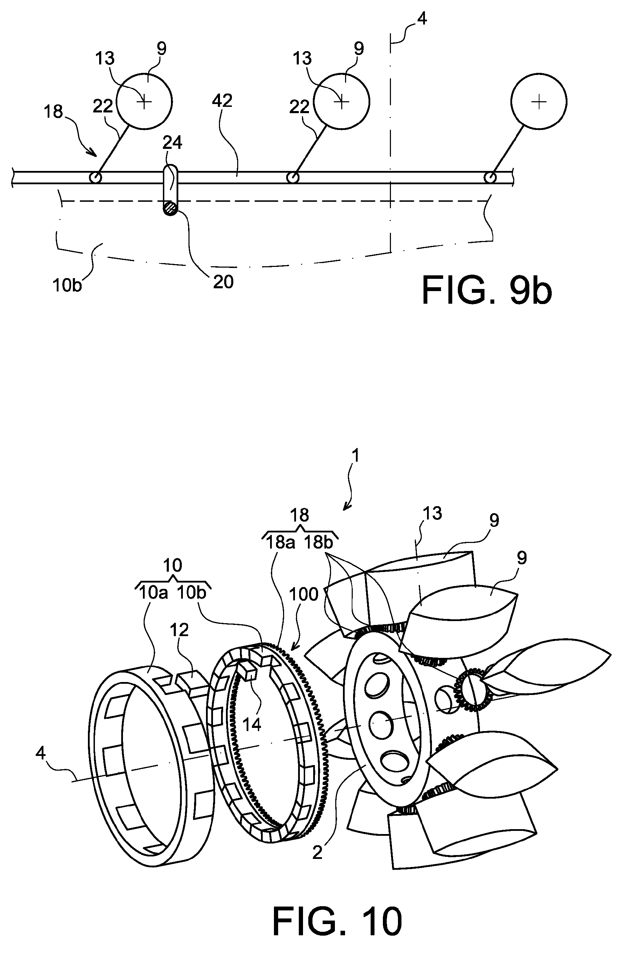

Les figures 9a et 9b montrent des moyens de liaison mécanique entre le rotor et les pales se présentant sous la forme d'une alternative de réalisation. Ici, ces moyens 18 comprennent toujours, associé à chaque pale 9, un bras 22 solidaire en rotation de celle-ci, selon l'axe de pivotement 13. Néanmoins, l'extrémité distale de chaque bras 22 est articulée sur un anneau commun 42 centré sur l'axe 4 et préférentiellement agencé autour du rotor 10b. Les moyens 18 comportent également un ou plusieurs doigts d'entraînement 20 solidaires du rotor 10b, faisant saillie radialement vers l'extérieur et glissant chacun dans une lumière axiale 24 prévue sur l'anneau 42. Néanmoins, ici, le nombre de pions et de lumière peut être largement inférieur au nombre de pales de l'hélice, contrairement au mode de réalisation montré sur les figures précédentes. Ainsi, en position de verrouillage du rotor telle que montrée sur la figure 9a, chaque doigt 20 se situe à une extrémité de sa lumière associée, puis coulisse jusqu'à l'extrémité opposée durant le déverrouillage du rotor 10b se déplaçant axialement. Dans cette position, la rotation relative du rotor par rapport au moyeu, schématisée sur la figure 9b, conduit à la rotation de l'anneau 42 autour de l'axe 4 grâce aux doigts 20, ainsi qu'au pivotement de chaque bras 22 autour de son axe 13, conduisant à la variation d'incidence de la pale 9 associée.

Enfin, la figure 10 montre un autre mode de réalisation préféré de la présente invention, dont la différence avec le précédent réside essentiellement dans la conception des moyens de liaison mécanique 18 entre le rotor et les pales. Ces moyens comprennent ici une roue dentée 18a centrée sur l'axe 4, faisant partie intégrante du rotor 10b du moteur électrique sans balai 10. De plus, ils intègrent, associée à chaque pale 9, une roue dentée 18b solidaire en rotation du pied de la pale concernée. Ainsi, en position verrouillée du rotor 10b, dans laquelle il est rapproché du stator 10a par opposition au mode de réalisation précédent, l'absence d'engrènement entre les roues 18a, 18b empêche la modification de l'incidence des pales par la roue dentée 18a. A cet égard, sur la figure 10, il n'a pas été représenté de dispositif de blocage en rotation du rotor 10b vis-à-vis du moyeu 2, étant néanmoins précisé qu'il peut prendre toute forme réputée appropriée par l'homme du métier. De plus, dans cette position, les pales 9 peuvent être maintenues dans leur incidence par des systèmes additionnels, également connus de l'homme du métier. Les moyens de liaison mécanique 18 adoptent donc ici un caractère débrayable.

En outre, après avoir été déplacé axialement vers sa position déverrouillée où il est éloigné du stator 10a, le rotor 10b engrène avec les roues 18b via la roue 18a qu'il porte, de sorte que sa rotation entraîne une modification de l'incidence des pales.

Bien entendu, diverses modifications peuvent être apportées par l'homme du métier à l'invention qui vient d'être décrite, uniquement à titre d'exemples non limitatifs.

## Revendications

1. Système (100) pour faire varier l'incidence des pales (9) d'une hélice de turbomachine pour aéronef, chaque pale étant montée pivotante sur un moyeu (2) tournant selon un axe de rotation (4) de ladite hélice, ledit système étant **caractérisé**
**en ce qu'**il comprend un moteur électrique sans balai à flux axial (10) comportant un stator (10a) équipé de bobines (12), destiné à être monté fixement sur une partie fixe de la turbomachine, ainsi qu'un rotor (10b) équipé d'aimants permanents (14), le rotor et le stator étant centrés sur l'axe de rotation (4) et agencés de manière à ce que les bobines se trouvent en regard desdits aimants permanents selon la direction dudit axe de rotation,
**en ce qu'**il comprend également des moyens de liaison mécanique (18) entre ledit rotor (10b) et lesdites pales (9),
et **en ce que** ledit rotor (10b) est monté déplaçable axialement entre une position verrouillée dans laquelle il est solidaire en rotation du moyeu tournant (2), et une position déverrouillée dans laquelle sa rotation relativement audit moyeu selon l'axe de rotation de l'hélice entraîne, par l'intermédiaire desdits moyens de liaison mécanique (18), une variation de l'incidence des pales.

2. Système selon la revendication 1 **caractérisé en ce qu'**il conçu de manière à ce que le déplacement axial dudit rotor (10b) entre sa position verrouillée et sa position déverrouillée, et/ou son déplacement inverse, s'effectue en générant une force axiale de répulsion/attraction entre les bobines (12) et les aimants (14).

3. Système selon la revendication 1 ou la revendication 2, **caractérisé en ce qu'**il comprend un dispositif mécanique (26) de blocage en rotation du rotor avec ledit moyeu tournant, le dispositif étant enclenché lorsque le rotor (10b) occupe sa position verrouillée.

4. Système selon la revendication 3, **caractérisé en ce que** le dispositif mécanique de blocage en rotation comprend des roues dentées (26a, 26b).

5. Système selon l'une quelconque des revendications précédentes, **caractérisé en ce que** lesdits moyens de liaison mécanique (18) entre ledit rotor et lesdites pales comprennent, associés à chaque pale (9), un doigt (20) solidaire dudit rotor glissant dans une lumière (24) d'un bras (22) fixe en rotation par rapport à la pale concernée, selon son axe de pivotement (13).

6. Système selon l'une quelconque des revendications précédentes, **caractérisé en ce qu'**il comprend également au moins un dispositif de stockage d'énergie (40) destiné à être interposé entre le rotor (10b) et le moyeu tournant (2), ledit dispositif de stockage étant conçu pour emmagasiner de l'énergie lors de la rotation du rotor visant à augmenter l'incidence des pales.

7. Hélice (1) pour turbomachine d'aéronef comprenant un système (100) selon l'une quelconque des revendications précédentes.

8. Hélice selon la revendication 7, intégrant en outre un moyeu (2) centré sur un axe longitudinal (4), un arbre d'entraînement en rotation (8) dudit moyeu (2) également centré sur l'axe longitudinal (4), et une pluralité de pales (9) chacune montée pivotante sur ledit moyeu (2), selon un axe de pivotement (13).

9. Hélice selon la revendication 8, **caractérisée en ce que** ledit rotor (10b) du moteur électrique sans balai est agencé autour dudit moyeu tournant (2).

10. Turbomachine pour aéronef comprenant au moins une hélice (1) selon l'une quelconque des revendications 7 à 9.

11. Procédé de commande de l'incidence des pales d'une hélice de turbomachine pour aéronef, à l'aide d'un système (100) selon l'une quelconque des revendications 1 à 7, **caractérisé en ce que** pour modifier l'incidence des pales, il comprend les étapes suivantes :
- le déverrouillage du rotor du moteur électrique sans balai, en le déplaçant axialement de sa position verrouillée à sa position déverrouillée ;
- la mise en rotation du rotor pour amener les pales à une incidence désirée ; et
- le verrouillage du rotor du moteur électrique sans balai, en le déplaçant axialement de sa position déverrouillée à sa position verrouillée.

12. Procédé selon la revendication 11, **caractérisé en ce qu'**au moins l'une des étapes de déverrouillage et de verrouillage est réalisée en générant une force axiale de répulsion/attraction entre les bobines et les aimants.

## Patentansprüche

1. System (100) zum Variieren des Anstellwinkels der Blätter (9) einer Turbomaschinenluftschraube für ein Luftfahrzeug, wobei jedes Blatt an einer Nabe (2), die sich um eine Rotationsachse (4) der Luftschraube dreht, schwenkbar angebracht ist, wobei das System **dadurch gekennzeichnet ist, dass** es einen bürstenlosen Axialfluss-Elektromotor (10) umfasst, der einen mit Spulen (12) ausgestatteten Stator (10a), welcher dazu bestimmt ist, an einem festen Teil der Turbomaschine fest angebracht zu werden, sowie einen mit Permanentmagneten (14) ausgestatteten Rotor (10b) umfasst, wobei der Rotor und der Stator um die Rotationsachse (4) zentriert sind und derart angeordnet sind, dass die Spulen den Permanentmagneten entlang der Richtung der Rotationsachse gegenüberliegen,
dass es auch Mittel zur mechanischen Verbindung (18) zwischen dem Rotor (10b) und den Schaufeln (9) umfasst,
und dass der Rotor (10b) zwischen einer verriegelten Stellung, in der er mit der umlaufenden Nabe (2) drehfest ist, und einer entriegelten Stellung, in der seine Rotation relativ zu der Nabe um die Rotationsachse der Luftschraube mittels der mechanischen Verbindungsmittel (18) zu einer Änderung des Anstellwinkels der Blätter führt, axial beweglich angebracht ist.

2. System nach Anspruch 1, **dadurch gekennzeichnet, dass** es derart ausgelegt ist, dass die Axialbewegung des Rotors (10b) zwischen seiner verriegelten Stellung und seiner entriegelten Stellung und/oder seine umgekehrte Bewegung durch Erzeugen einer axialen Abstoß-/Anziehungskraft zwischen den Spulen (12) und den Magneten (14) erfolgt.

3. System nach Anspruch 1 oder Anspruch 2, **dadurch gekennzeichnet, dass** es eine mechanische Vorrichtung (26) zum Drehblockieren des Rotors mit der umlaufenden Nabe umfasst, wobei die Vorrichtung eingerückt ist, wenn der Rotor (10b) seine verriegelte Stellung einnimmt.

4. System nach Anspruch 3, **dadurch gekennzeichnet, dass** die mechanische Drehblockierungsvorrichtung Zahnräder (26a, 26b) umfasst.

5. System nach einem der vorhergehenden Ansprüche, **dadurch gekennzeichnet, dass** die mechanischen Verbindungsmittel (18) zwischen dem Rotor und den Blättern jedem Blatt (9) zugeordnet einen mit dem Rotor fest verbundenen Finger (20) umfassen, der in einer Öffnung (24) eines Arms (22) gleitet, welcher gegenüber dem betreffenden Blatt um seine Schwenkachse (13) drehfest ist.

6. System nach einem der vorhergehenden Ansprüche, **dadurch gekennzeichnet, dass** es auch wenigstens eine Energiespeichervorrichtung (40) umfasst, die dazu bestimmt ist, zwischen dem Rotor (10b) und der umlaufenden Nabe (2) eingefügt zu werden, wobei die Speichervorrichtung dazu ausgelegt ist, während der Rotation des Rotors Energie zu speichern, mit dem Ziel, den Anstellwinkel der Blätter zu vergrößern.

7. Luftschraube (1) für eine Turbomaschine eines Luftfahrzeugs, umfassend ein System (100) nach einem der vorhergehenden Ansprüche.

8. Luftschraube nach Anspruch 7, ferner enthaltend eine Nabe (2), die um eine Längsachse (4) zentriert ist, eine Welle zum Drehantreiben (8) der Nabe (2), die ebenfalls um die Längsachse (4) zentriert ist, sowie eine Vielzahl von Blättern (9), die jeweils an der Nabe (2) um eine Schwenkachse (13) schwenkbar angebracht sind.

9. Luftschraube nach Anspruch 8, **dadurch gekennzeichnet, dass** der Rotor (10b) des bürstenlosen Elektromotors um die umlaufende Nabe (2) angeordnet ist.

10. Turbomaschine für ein Luftfahrzeug, umfassend wenigstens eine Luftschraube (1) nach einem der Ansprüche 7 bis 9.

11. Verfahren zur Steuerung des Anstellwinkels der Blätter einer Turbomaschinenluftschraube für ein Luftfahrzeug, mit Hilfe eines Systems (100) nach einem der Ansprüche 1 bis 7, **dadurch gekennzeichnet, dass** es zur Änderung des Anstellwinkels der Blätter die folgenden Schritte umfasst:
- das Entriegeln des Rotors des bürstenlosen Elektromotors, indem er axial von seiner verriegelten Stellung in seine entriegelte Stellung bewegt wird;
- das Indrehungversetzen des Rotors, um die Blätter in einen gewünschten Anstellwinkel zu bringen; und
- das Verriegeln des Rotors des bürstenlosen Elektromotors, indem er axial von seiner entriegelten Stellung in seine verriegelte Stellung bewegt wird.

12. Verfahren nach Anspruch 11, **dadurch gekennzeichnet, dass** wenigstens einer der Schritte des Entriegelns und des Verriegelns durch Erzeugen einer axialen Abstoß-/Anziehungskraft zwischen den Spulen und den Magneten vollzogen wird.

## Claims

1. A system (100) for varying the angle of attack of the blades (9) of an aircraft turbine engine propeller, each blade being pivotably mounted on a hub (2) rotating along an axis of rotation (4) of said propeller, said system being **characterized**
**in that** it comprises an axial flow brushless electric motor (10) comprising a stator (10a) equipped with coils (12), intended to be securely mounted on a stationary part of the turbine engine, as well as a rotor (10b) equipped with permanent magnets (14), the rotor and the stator being centered on the axis of rotation (4) of said propeller and arranged so that the coils are located opposite said permanent magnets in the direction of said axis of rotation
**in that** it also comprises mechanical connecting means (18) between said rotor (10b) and said blades (9),
and **in that** said rotor (10b) is axially movably mounted between a locked position in which it is rotationally secured to the rotating hub (2), and an unlocked position in which its rotation relative to said hub along the axis of rotation of the propeller causes, via said mechanical connecting means (18), a variation in the angle of attack of the blades.

2. The system according to claim 1, **characterized in that** the system is designed so that the axial movement of said rotor (10b) between its locked position and its unlocked position, and/or its reverse movement, is done by generating an axial repulsion/attraction force between the coils (12) and the magnets (14).

3. The system according to claim 1 or claim 2, **characterized in that** it comprises a mechanical device (26) for locking the rotation of the rotor with the rotary hub, the device being triggered when the rotor (10b) is its locked position.

4. The system according to claim 3, **characterized in that** the mechanical rotational locking device comprises toothed wheels (26a, 26b).

5. The system according to any one of the preceding claims, **characterized in that** said mechanical connecting means (18) between said rotor and said blades comprise, associated with each blade (9), a finger (20) secured with said rotor sliding in a lumen (24) of an arm (22) fixed in rotation relative to the concerned blade, along its pivot axis (13).

6. The system according to any one of the preceding claims, **characterized in that** it also comprises at least one energy storing device (40) intended to be inserted between the rotor (10b) and the rotary hub (2), said storage device being designed to store energy during the rotation of the rotor aiming to increase the angle of attack of the blades.

7. An aircraft turbine engine propeller (1) comprising a system (100) according to any one of the preceding claims.

8. The propeller according to claim 7, also integrating a hub (2) centered on a longitudinal axis (4), a shaft (8) for driving the rotation of said hub (2) also centered on the longitudinal axis (4), and a plurality of blades (9) each pivotably mounted on said hub (2), along a pivot axis (13).

9. The propeller according to claim 8, **characterized in that** the rotor (10b) of the brushless electric motor is arranged around said rotary hub (2).

10. An aircraft turbine engine comprising at least one propeller (1) according to any one of claims 7 to 9.

11. A method for controlling the angle of attack of the blades of an aircraft turbine engine propeller, using the system (100) according to any one of claims 1 to 7 **characterized in that** to modify the angle of attack of the blades, it comprises the following steps:
- unlocking the rotor of the brushless electric motor, by moving it axially from its locked position to its unlocked position;
- rotating the rotor to bring the blades to a desired angle of attack; and
- locking the rotor of the brushless electric motor, by axially moving it from its unlocked position to its locked position.

12. The method according to claim 11, **characterized in that** at least one of the unlocking steps is done by generating an axial repulsion/attraction force between the coils and the magnets.
